# EUROPÄISCHE PATENTSCHRIFT

(11) **EP 0 673 601 B1**
(45) Veröffentlichungstag und Bekanntmachung des Hinweises auf die Patenterteilung: **02.06.1999**
(21) Anmeldenummer: 95101994.2
(22) Anmeldetag: 14.02.1995
(51) Int. Cl.: A01K 63/04

(54) **Filter für Aquarien**
Filter for aquaria
Filtre pour aquariums

(30) Priorität: 26.03.1994 DE 4410562
(43) Veröffentlichungstag der Anmeldung: 27.09.1995
(73) Patentinhaber: EHEIM GMBH & CO. KG, D-73779 Deizisau (DE)
(72) Erfinder: Wiedenmann, Walter, D-73779 Deizisau (DE); Lützau, Frank v., D-74321 Bietigheim (DE); Frank, Gerhard, D-73730 Esslingen (DE); Schmidt, Michael, D-71083 Herrenberg (DE); Mayer, Ferdinand, D-73525 Schwäbisch Gmünd (DE); Herold, Ulrich, Dr., D-72644 Oberboihingen (DE)
(74) Vertreter: Kratzsch, Volkhard, Dipl.-Ing.

(56) Entgegenhaltungen:
- EP-A- 0 295 149
- EP-A- 0 453 804
- EP-A- 0 484 896
- EP-A- 0 558 807
- DE-A- 2 700 030
- DE-A- 3 136 383
- GB-A- 2 141 040

## Beschreibung

Die Erfindung bezieht sich auf einen Filter für Aquarien der im Oberbegriff des Anspruchs 1 genannten Art.

Es ist ein Filter dieser Art bekannt (DE-OS 40 13 324), der als alternierender Heb-Senk-Filter arbeitet. Diese Wirkung basiert bei diesem bekannten Filter darauf, daß jedes einzelne Filterabteil zumindest eine Überlaufsaughebereinrichtung aufweist, die nach dem Prinzip der Heberschleife arbeitet und deren Einlaß fußseitig und dabei etwa auf Höhe des Bodens des Filterabteils angeordnet ist und deren Auslaß nach unten zum nächstfolgenden Filterabteil ausmündet. Beim untersten Filterabteil mündet der Auslaß der darin vorgesehenen überlaufsaughebereinrichtung in eine Bodenkammer im Inneren des Filtergehäuses. Bei dieser Gestaltung des Filters erfolgt ein mehrstufiger Ablauf der Filtrierung. Die Steuerung des zyklischen Heb-Senk-Vorganges erfolgt ohne besondere mechanisch bewegte Teile. Für große Filterleistungen ist allerdings eine Grenze gesetzt. Der bekannte Filter ist vornehmlich als Innenfilter geeignet, obwohl eine Eignung auch als Außenfilter denkbar ist, wozu dann aber noch gewisse Anpassungen notwendig sind. Bei diesem genannten Filter ist dadurch eine Nebenkammer gebildet, daß mit den einzelnen Filterabteilen einstückige, diese durchsetzende Rohrstücke beim Übereinandersetzen der Filterabteile einen durchgehenden Kanal bilden, der bei diesem bekannten Filter als Schutz vor einem Trockenlaufen der Pumpe vorgesehen ist und an den oben befindlichen Wasserzulauf des Filters angeschlossen ist, so daß bedarfsweise darüber ungefiltertes, unmittelbar aus dem Aquariumbecken stammendes Wasser in diese Nebenkammer einfließen kann. Der unten befindliche Auslaß dieses Kanals ist mittels einer schwimmergesteuerten Ventileinrichtung steuerbar. Diese befindet sich in einer Bodenkammer im Filtergehäuse, die darin unterhalb des zuunterst befindlichen Filterabteils ausgebildet ist und in der eine daraus absaugende, motorisch angetriebene Pumpe plaziert ist, deren Druckseite an ein Auslaufrohr angeschlossen ist, über das das aus der Bodenkammer abgesaugte, gefilterte Wasser zurück zum Aquariumbecken geleitet werden kann. Die innerhalb der Bodenkammer befindliche, schwimmergesteuerte Ventileinrichtung tritt nur dann in Funktion, wenn durch irgendeinen Defekt oder eine Fehlfunktion der Wasserstand in der Bodenkammer so niedrig sein sollte, daß die Gefahr besteht, daß die aus der Bodenkammer absaugende Pumpe trockenläuft. Die Ventileinrichtung weist eine in einem Käfig gehaltene Schwimmerkugel auf, die bei ausreichendem Wasserstand in der Bodenkammer aufschwimmt und dadurch von unten nach oben gegen den unten befindlichen Auslaß der Nebenkammer gedrückt wird und dadurch diesen ständig verschließt. Nur bei zu geringem Wasserstand in der Bodenkammer und somit fehlendem Auftrieb für die Schwimmerkugel fällt diese durch Schwerkraft herab, so daß der Auslaß der Nebenkammer freigegeben und dadurch eine Verbindung dieser mit der Bodenkammer hergestellt wird. Dadurch kann die Pumpe nunmehr aus dem Aquariumbecken über die Nebenkammer und durch deren Auslaß in die Bodenkammer gelangendes, ungefiltertes Wasser aus der Bodenkammer absaugen, wodurch ein Trockenlauf verhindert wird. Die Nebenkammer mit Ventileinrichtung bildet bei diesem bekannten Filter somit eine Noteinrichtung, die normalerweise nicht in Funktion ist und die mit der erzielten alternierenden Heb-Senk-Funktion nichts zu tun hat.

Außerdem ist ein Filter bekannt (DE-PS 27 00 030), der ebenfalls als alternierender Heb-Senk-Filter arbeitet, jedoch nicht gattungsgemäß ausgebildet ist. Dieser Filter ist über eine Zulaufleitung mit dem Aquariumbecken verbunden. Er enthält nur ein Filterabteil. Unterhalb des Filterabteils ist im Filtergehäuse eine Bodenkammer gebildet, in die eine umgekehrt U-förmige Leitung mit einem freien Rohrende einmündet, wobei in diese Leitung eine Pumpe geschaltet ist, die aus der Bodenkammer sich dort ansammelndes Wasser absaugt und dieses über eine zum Aquariumbecken führende Rücklaufleitung in das Becken zurückführt. Aus Sicherheitsgründen für den Fall einer Verstopfung des Filterabteils ist zwischen dem oberhalb des Filterabteils befindlichen Raum, wo die Zufuhr erfolgt, und der Bodenkammer eine Bypaßleitung vorgesehen, so daß bei verstopftem Filterabteil das oben zugeführte Wasser durch die Bypaßleitung ungefiltert direkt nach unten in die Bodenkammer gelangen kann. Beim Absaugen des Wassers aus der Bodenkammer über das dort offene Ende des einen U-Schenkels sinkt der Wasserspiegel im Filterabteil nach unten ab. Die Ablaufmenge pro Zeiteinheit ist größer als die Zulaufmenge pro Zeiteinheit. Aufgrund dieser Gestaltung ergibt sich ein Heb-Senk-Betrieb. Der Filter ist jedoch hinsichtlich der die Heb-Senk-Funktion bewirkenden Einrichtung kompliziert, da das umgekehrt U-förmige Rohr, an das die Pumpe angeschlossen ist, die Filtermasse im Filterabteil mit beiden Schenkeln durchsetzt. Zusätzlich dazu ist die Filtermasse im Filterabteil auch noch von der Bypaßleitung durchsetzt, was auch dann Probleme mit sich bringt, wenn der eine U-Schenkel durch diese Bypaßleitung hindurchführt.

Der Erfindung liegt die Aufgabe zugrunde, einen Filter für Aquarien der eingangs genannten Art zu schaffen, bei dem die Einrichtung, die die Heb-Senk-Funktion bewirkt, einfach und kostengünstig gestaltet ist, bedarfsweise relativ schnell und einfach demontierbar und ersetzbar ist und eine große Filterleistung ermöglicht.

Die Aufgabe ist bei einem Filter für Aquarien der eingangs genannten Art gemäß der Erfindung durch die Merkmale im Kennzeichnungsteil des Anspruchs 1 gelöst. Durch die Ausbildung der Nebenkammer in einem Nebengehäuse sind die Voraussetzungen dafür erfüllt, dieses bedarfsweise schnell und einfach abzunehmen, z. B. zu reinigen, und wieder zu montieren. Die Heb-Senk-Funktion wird bei diesem Filter durch die im ständigen Wechsel in Funktion tretende, schwimmergesteuerte Ventileinrichtung in der Nebenkammer erreicht, wobei jeweils bereits gefiltertes Wasser in die Nebenkammer gelangt. Dadurch ist vermieden, daß die Nebenkammer und die schwimmergesteuerte Ventileinrichtung durch etwaige im Wasser mitgeführte Schmutzpartikel verunreinigt werden kann, weil diese vorher beim Filtervorgang bereits abgefiltert wurden. Der Filter ist somit in hohem Maße funktionssicher und dies für Langzeitbetrieb. Er ermöglicht einen großen Durchsatz und somit eine große Filterleistung.

Weitere vorteilhafte Erfindungsmerkmale und Ausgestaltungen ergeben sich aus den Ansprüchen 2 bis 24.

Die Erfindung bezieht sich ferner auf einen Filter für Aquarien mit den Merkmalen im Oberbegriff des nebengeordneten Anspruchs 25. Ein solcher Filter funktioniert ohne Heb-Senk-Betrieb. Der Erfindung liegt die Aufgabe zugrunde, einen solchen Filter einfach, kompakt und kostengünstig zu gestalten, und dabei im wesentlichen die gleichen Bauteile verwenden zu können, wie sie beim vorgenannten Filter mit Heb-Senk-Funktion vorgesehen sind, so daß beide, hinsichtlich der Funktion verschiedene Filtertypen mit im wesentlichen gleichen Bauteilen gebildet werden können.

Die Aufgabe ist bei dem in Anspruch 25 angegebenen Filter durch die Merkmale in dessen Kennzeichnungsteil gelöst. Ein solcher Filter ist einfach und vor allem kostengünstig, da zumindest im wesentlichen auf gleiche Bauteile zurückgegriffen werden kann, die auch ein Filter mit Heb-Senk-Funktion hat. Die Kosten werden dadurch erheblich gesenkt, daß für die Herstellung der einzelnen Bauteile nur unwesentlich modifizierte Werkzeuge notwendig sind und somit nur geringe zusätzliche Werkzeugkosten anfallen.

Weitere vorteilhafte Erfindungsmerkmale und Ausgestaltungen ergeben sich aus den Ansprüchen 26 bis 50, die zuminedst überwiegend sowohl den Filter mit Heb-Senk-Funktion als auch denjenigen ohne diese Funktion betreffen und vorteilhaft weitergestalten.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen senkrechten Schnitt entlang der Linie I-I in Fig. 2 eines Filters für Aquarien gemäß einem ersten Ausführungsbeispiel,
- Fig. 2: eine schematische Seitenansicht mit senkrechtem Schnitt entlang der Linie II-II in Fig. 1,
- Fig. 3: eine schematische Draufsicht des Filters in Pfeilrichtung III in Fig. 1, jedoch ohne oben eingesetzter Anschlußeinrichtung,
- Fig. 4: einen schematischen senkrechten Schnitt entlang der Linie IV-IV in Fig. 5 eines Filters für Aquarien gemäß einem zweiten Ausführungsbeispiel,
- Fig. 5: eine schematische Seitenansicht mit senkrechtem Schnitt entlang der Linie V-V in Fig. 4,
- Fig. 6: eine schematische Draufsicht in Pfeilrichtung VI in Fig. 4, jedoch bei nicht eingesetzter Anschlußeinrichtung.

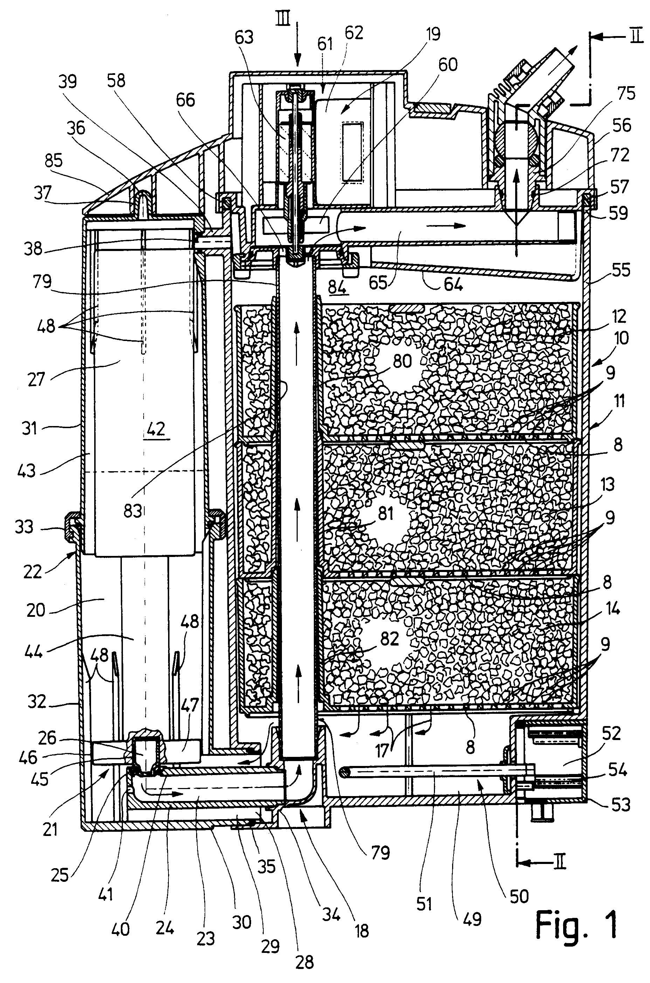

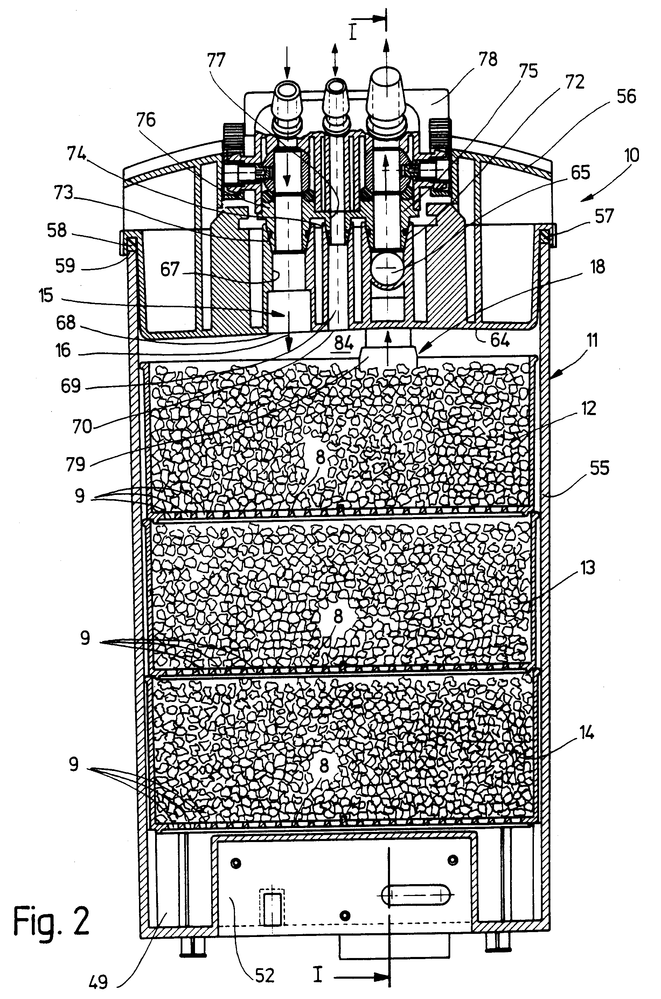

In Fig. 1 - 3 ist schematisch ein Filter 10 für Aquarien gemäß einem ersten Ausführungsbeispiel gezeigt, der insbesondere als Außenfilter ausgebildet ist und über entsprechende Schlauchverbindungen mit einem nicht weiter gezeigten Aquariumbecken verbunden werden kann.

Der Filter 10 weist ein allgemein mit 11 bezeichnetes Gehäuse 11 auf, das einen etwa viereckigen, insbesondere etwa quadratischen, Umriß hat. Das Gehäuse 11 besteht z. B. aus Kunststoff. Im Gehäuse 11 ist mindestens ein Filterabteil für Filtermaterial enthalten. Beim gezeigten Ausführungsbeispiel sind insgesamt drei vertikal übereinander plazierte Filterabteile 12, 13 und 14 angeordnet, die jeweils Filtermaterial, z. B. Steine, Kies od. dgl., enthalten. Die einzelnen Filterabteile 12, 13 und 14 sitzen aufeinander und lassen sich nach oben hin nacheinander leicht aus dem Gehäuse 11 entnehmen.

Dem Filterabteil 12 ist über einen Zulauf 15 von oben her in Pfeilrichtung 16 Wasser zuführbar, das von dem nicht gezeigten Aquariumbecken her zugeführt wird. Das Wasser passiert das Filterabteil 12, 13 und 14 in vertikaler Richtung (Pfeile 17) und ist danach über eine allgemein mit 18 bezeichnete Absaugleitung mittels einer Pumpe19 absaugbar und in das nicht gezeigte Aquariumbecken zurückführbar. Mittels der Pumpe 19 wird das abgesaugte Wasser über eine entsprechende Leitung in das Aquariumbecken zurückgeführt.

Der Filter 10 arbeitet als alternierender Heb-Senk-Filter ähnlich demjenigen gemäß DE-OS 40 13 324. Die besondere Funktionsweise eines derartigen alternierenden Heb-Senk-Filters und insbesondere die dadurch erreichte starke Sauerstoffanreicherung ist in der vorgenannten Textstelle eingehend beschrieben, so daß zur Vermeidung von Wiederholungen generell darauf Bezug genommen werden kann.

Der Filter 10 weist zumindest eine Nebenkammer 20 auf, die vom Wasser speisbar ist.Der in Fig. 1 unten befindliche Auslaß der Nebenkammer 20 steht mit der Absaugleitung 18 in Verbindung und ist mittels einer schwimmergesteuerten Ventileinrichtung steuerbar, die allgemein mit 21 bezeichnet ist.

Eine wesentliche Besonderheit des Filters 10 liegt darin, daß die Nebenkammer 20 in einem Nebengehäuse 22 ausgebildet und nach dem Prinzip kommunizierender Röhren von dem Wasser gespeist ist, das nach Passieren des Filterabteils 12, 13 und 14 gefiltert worden ist. In die Nebenkammer 20 gelangt also nur solches Wasser, das bereits gefiltert worden ist.

Die Nebenkammer 20 enthält einen Kanal 23, der in einem z. B. eckigen oder runden Rohrabschnitt 24 ausgebildet und an die Absaugleitung 18 angeschlossen ist. Der Kanal 23 in der Nebenkammer 20 enthält eine Ventilöffnung 25, die von einem Ventilverschlußglied 26 der Ventileinrichtung 21 beherrscht ist und die im Wechsel vom Ventilverschlußglied 26 verschließbar bzw. bei Abheben dieses öffenbar ist. Das Ventilverschlußglied 26 ist mittels eines Schwimmers 27 gesteuert, der in der Nebenkammer 20 angeordnet und mit dem Ventilverschlußglied 26 verbunden ist.

Die Nebenkammer 20 weist mindestens eine Zulauföffnung 28 auf, über die die Nebenkammer 20 mit dem Gehäuse 11 des Filters 10 in Verbindung steht und gefiltertes Wasser ständig in die Nebenkammer 20 gelangen kann. Die Zulauföffnung 28 steht mit einer Leitung 29 in Verbindung, die aus einem z. B. eckigen oder runden Rohrteil 30 gebildet ist und unterhalb des untersten Filterabteils 14 in das Innere des Gehäuses 11 mündet.

Der den Kanal 23 enthaltende Rohrabschnitt 24 verläuft im Inneren des Rohrteils 30 und wird von letzterem mit Abstand umgeben unter Bildung eines z. B. radialen Kanals der Leitung 29. Der Kanal 23 , insbesondere Rohrabschnitt 24, und/oder die Leitung 29, insbesondere der Rohrteil 30, sind mit dem Nebengehäuse 22 einstückig (Fig. 1). Der Rohrabschnitt 24 und derRohrteil 30 verlaufen dabei etwa horizontal, während der übrige Teil des Nebengehäuses 22 etwa vertikal verläuft. Das Nebengehäuse 22 ist rohrförmig ausgebildet und aus zwei koaxial aneinander anschließenden Rohrhälften 31 und 32 gebildet, von denen die untere Rohrhälfte 32 den damit einstückigen, davon etwa rechtwinklig abgehenden Rohrabschnitt 24 und äußeren Rohrteil 30 aufweist. Beide Rohrhälften 31, 32 sind miteinander lösbar verbunden, wobei die obere Rohrhälfte 31 von oben her mit ihrem Ende in die untere Rohrhälfte 32 eingreift. Beide Rohrhälfte 31, 32 sind mittels einer Verbindungseinrichtung 33, z. B. eines Ringes, unter Zwischenfügung einer Dichtung miteinander verbunden.

Das Nebengehäuse 22 ist an das Gehäuse 11 des Filters 10 lösbar angesetzt und angeschlossen. Das Gehäuse 11 des Filters 10 weist am in Fig. 1 unteren Ende der Absaugleitung 18 einen ersten Anschlußteil 34 und ferner einen dazu konzentrischen zweiten Anschlußteil 35 auf. Jeder Anschlußteil 34, 35 ist rohrförmig und an den Durchmesser des Rohrabschnittes 24 bzw. Rohrteils 30 angepaßt. Der Rohrabschnitt 24 ist mit seinem Ende unter Zwischenfügung einer Dichtung an den ersten Anschlußteil 34 anschließbar, insbesondere in letzteren einsteckbar. Der Rohrteil 30 ist mit seinem Ende unter Zwischenfügung einer Dichtung an den zweiten Anschlußteil 35 anschließbar, insbesondere in letzteren einsteckbar. Auf diese Weise wird die Verbindung des Nebengehäuses 22 mit dem Gehäuse 11 des Filters 10 im unteren Bereich hergestellt. Das in Fig. 1 obere Ende des Nebengehäuses 22 weist einen stiftartigen Vorsprung 36 auf, der in eine obere Aufnahme 37 des Gehäuses 11 im wesentlichen formschlüssig eingreift. In diesem oberen Endbereich weist das Nebengehäuse 22 eine Entlüftungsöffnung 38 in der Wandung der Rohrhälfte 31 auf, mit der das Nebengehäuse 22 an einen oberen Entlüftungsstutzen 39 des Gehäuses 11 anschließbar ist, der in das Innere des Gehäuses 11 ausmündet. Auch hier erfolgt der Anschluß lösbar und mittels Steckverbindung unter Zwischenfügung einer Dichtung. Insgesamt ist somit das Nebengehäuse 22 lösbar mit dem Gehäuse 11 verbindbar unter dichter Herstellung der jeweiligen beschriebenen Kanäle.

Die Ventilöffnung 25 ist in einer Wandung 40, vorzugsweise in der oberen Wandung, des Kanals 23, insbesondere des Rohrabschnittes 24, ausgebildet. Der Kanal 23, insbesondere der Rohrabschnitt 24, weist außerdem zumindest eine Bypaßöffnung 41 auf, über die der Kanal 23 mit der Nebenkammer 20 im Nebengehäuse 22 ständig in Verbindung steht und die für die Absaugung durch die Absaugleitung 18 eine minimale Wasserabsaugmenge bestimmt, wodurch verhindert ist, daß die Pumpe 19 trocken läuft. Ersichtlich weist die Ventilöffnung 25 bzw. der Kanal 23 einen wesentlich größeren Durchlaßquerschnitt als die Bypaßöffnung 41 auf. Der Durchlaßquerschnitt der Ventilöffnung 25 ist in Bezug auf denjenigen der Bypaßöffnung 41 derart abgestimmt, unter Einbeziehung des Schwimmers 27 und Ventilverschlußgliedes 26, insbesondere des Auftriebes der letztgenannten, daß auf diese Weise der alternierende Heb-Senk-Betrieb erreicht wird. Diese Betriebsweise wird später noch näher erläutert.

Der Schwimmer 27 ist aus einem Zylinderkörper 42 aus relativ leichtem Material mit großem Auftriebsvermögen gebildet, der in der Nebenkammer 20 schwimmend gehalten ist. Der Zylinderkörper 42 ist im Querschnitt, vorzugsweise nur unwesentlich, kleiner bemessen als der zylindrische Innenraum 43 des rohrförmigen Nebengehäuses 22, insbesondere der Rohrhälften 31, 32. Der Schwimmer 27, insbesondere Zylinderkörper 42, trägt an einem dazu koaxialen Träger 44, der in Fig. 1 nach unten abstrebt, als Ventilverschlußglied 26 ein koaxiales Zylinderelement 45, das damit einstückig sein kann oder statt dessen in den Träger eingesetzt und darin befestigt sein kann. Der Träger 44 besteht z. B. aus einer Stange. In der Nähe des Ventilverschlußgliedes 26, insbesondere des Zylinderelements 45, ist ein Führungselement 46 am Träger 44 gehalten, das z. B. aus einer Führungsscheibe 47 besteht und im etwa zylindrischen Innenraum 43 des rohrförmigen Nebengehäuses 22 zentriert und geführt ist. Auch der Schwimmer 27, insbesondere der Zylinderkörper 42, ist im Inneren des Nebengehäuses 22 zentriert und geführt. Zur Führung dienen jeweils innere Führungsteile 48, z. B. Führungsstege, die in Umfangsrichtung z. B. in etwa gleich großen Umfangswinkelabständen aufeinanderfolgen.

Das Gehäuse 11 des Filters 10 weist unterhalb des untersten Filterabteils 14 eine nach außen abgeschlossene Bodenkammer 49 auf, der das gefilterte Wasser nach Passieren des Filterabteils 12, 13 und 14 zuführbar ist. Mit dieser Bodenkammer 49 steht die Nebenkammer 20 über die Zulauföffnung 28 der Leitung 29, insbesondere des Rohrteils 30, ständig in Verbindung.

In der Bodenkammer 49 ist - je nach Bedarf des Benutzers - eine beim ersten Ausführungsbeispiel installierte Heizeinrichtung 50 angeordnet, die insbesondere eine elektrische Heizpatrone 51 aufweist. Das Gehäuse 11 des Filters 10 weist auf Höhe der Bodenkammer 49 an einer äußeren Umfangsseite eine Hohlkammer 52 auf, die mittels einer Kappe 53 verschließbar ist. In der Hohlkammer 52 ist eine Halterung der Heizeinrichtung 50 und eine elektrische oder elektronische, in Fig. 1 nur schematisch angedeutete Steuereinrichtung 54 für die Heizeinrichtung 50 aufnehmbar.

Wird beim Filter 10 keine derartige Heizeinrichtung 50 gewünscht, entfällt diese ebenso wie die Steuereinrichtung 54. Die Kappe 53 kann dann bleibend befestigt werden, z. B. durch Kleben, Schweißen od. dgl.. Die Gestaltung des Filters 10 bietet die Möglichkeit, bei Bedarf später noch eine elektrische Heizeinrichtung 50 und Steuereinrichtung 54 zu installieren.

Jedes Filterabteil 12 bis 14 weist einen als Filterelement ausgebildeten Boden 8 auf, der Durchlässe 9 enthält und z. B. als Gitter ausgebildet ist.

Das Gehäuse 11 des Filters 10 ist zweiteilig. Es weist ein etwa topfförmiges Unterteil 55 und einen darauf aufgesetzten Deckel 56 auf. In das Unterteil 55 ist das Filterabteil 12, 13 und 14 einsetzbar und darin lösbar gehalten. Der Deckel 56 dient zum oberen Abschluß des Unterteils 55 und ist dazu auf dieses von oben her aufsetzbar und daran lösbar fixierbar. Der Deckel 56 ist mittels am Unterteil 55 sitzender, hier nicht weiter hervorgehobener Verschlußglieder, z. B. mittels Verschlußbügeln, lösbar mit dem Unterteil 55 verbindbar. Zwischen dem Deckel 56 und dem Unterteil 55 ist eine axial zusammendrückbare Dichtung 57 angeordnet, die aus einem Formdichtungsring bestehen kann. Die Dichtung 57 ist in einer Nut 58 des Deckels 56 aufgenommen, die zum Unterteil 55 hin offen ist. In die Nut 58 mit enthaltener Dichtung 57 kann beim Aufsetzen des Deckels 56 ein oberer Randteil 59 des Unterteils 55 im wesentlichen formschlüssig eingreifen.

Der Deckel 56 und/oder das Unterteil 55 und/oder das Nebengehäuse 22 sind aus Kunststoff gebildet. Der Deckel 56 enthält zumindest einen Teil der Absaugleitung 18. Im deckelseitigen Bereich der Absaugleitung 18 befindet sich ein Laufrad 60 der Pumpe 19. Der Deckel 56 enthält in einem dafür besonderen Bereich die Pumpe 19, die mit einem Elektromotor 61 für den Antrieb des Laufrades 60 Vereinigt ist, der einen Stator 62 und einen Rotor 63 aufweist. Im Deckel 56 verläuft oberhalb einer eine Deckelunterseite begrenzenden Deckelwand 64 ein etwa horizontaler Auslaßkanal 65, der einen Teil der Absaugleitung 18 bildet. Die Deckelwand 64 enthält im Bereich des oberhalb davon befindlichen Laufrades 60 der Pumpe 19 zumindest eine Absaugöffnung 66, die mit dem Auslaßkanal 65 der Absaugleitung 18 in Verbindung steht.

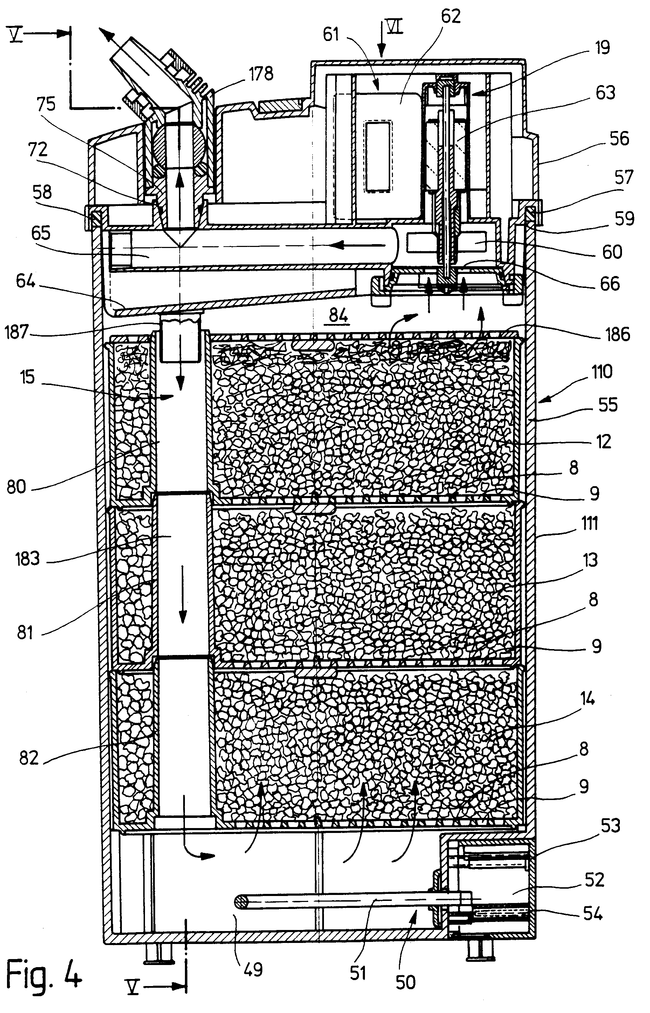

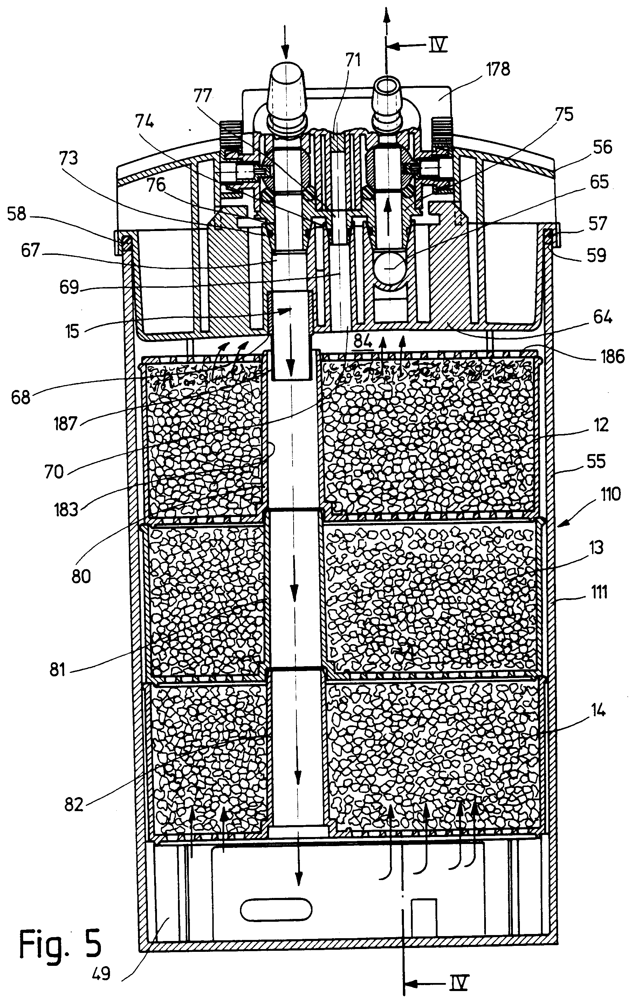

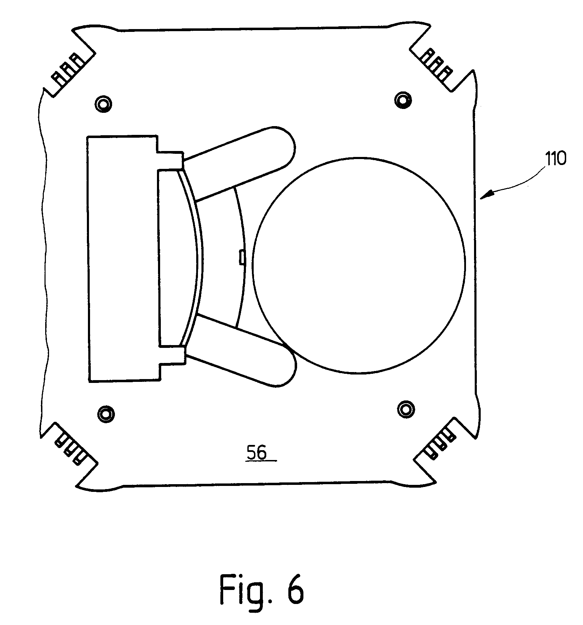

Der Deckel 56 enthält ferner einen Zulaufkanal 67 als Teil des Zulaufs 15, wobei der Zulaufkanal 67 in eine Zulauföffnung 68 ausmündet, die in der Deckelwand 64 enthalten ist. Neben dem Zulaufkanal 67 enthält der Deckel 56 einen zur Deckelunterseite offenen Entlüftungskanal 69 mit endseitiger Entlüftungsöffnung 70, die in der Deckelwand 64 enthalten ist und dort ausmündet. Der Entlüftungskanal 69 ist so konzipiert, daß er bei Nichtbedarf, wie beim zweiten Ausführungsbeispiel in Fig. 4 - 6, verschlossen ist oder verschließbar ist, z. B. mittels eines in Fig. 5 schematisch angedeuteten Blindstopfens 71.

Der im Deckel 56 enthaltene Auslaßkanal 65 und/oder Zulaufkanal 67 und/oder Entlüftungskanal 69 weist im Deckel 56 jeweils eine Aufnahme 72 bzw. 73 bzw. 74 auf, die dem Anschluß eines darin einsteckbaren Auslaufstutzens 75 bzw. Zulaufstutzens 76 bzw. Entlüftungsstutzens 77 dient, die z. B. an einer Anschlußeinrichtung 78 angeordnet sind.

Aus Fig. 1 kann man erkennen, daß die Deckelwand 64, ausgehend von der dort rechten Außenseite, zur mindestens einen Absaugöffnung 66 unterhalb des Laufrades 60 hin schräg ansteigt. Der Deckel 56 ist je nach Bauart des Filters 10 in einer Position, wie sie in Fig.1 - 3 beim ersten Ausführungsbeispiel gezeigt ist, oder statt dessen in einer anderen Position, wie sie beim zweiten Ausführungsbeispiel in Fig. 4 - 6 gezeigt ist und die gegenüber der ersten Position um 180° innerhalb der Deckelebene gedreht ist, auf das Unterteil 55 aufsetzbar. Der Deckel 56 ist somit für zwei verschiedene Ausführungsformen von Filtern 10 bzw. 110 gleichermaßen verwendbar.

Beim ersten Ausführungsbeispiel des Filters 10 in Fig. 1 - 3 ist an die mindestens eine Absaugöffnung 66 im Bereich unterhalb des Laufrades 60 in der Deckelwand 64 ein Rohr 79 angeschlossen, das sich nahezu gänzlich über die Höhe des Unterteils 55 erstreckt und Teil der Absaugleitung 18 ist. Das Rohr 79 passiert das Filterabteil 12, 13 und 14 und ist diesem gegenüber abgeschlossen. Jedes Filterabteil 12, 13 und 14 enthält einen damit einstückigen Rohrteil 80 bzw. 81 bzw. 82, die beim Übereinandersetzen der Filterabteile 12, 13 und 14 aneinander anschließen und einen durchlaufenden Rohrkanal 83 bilden. Durch diesen Rohrkanal 83 erstreckt sich das Rohr 79 hindurch. Mit seinem in Fig. 1 unteren Ende ist das Rohr 79 an den ersten Anschlußteil 34 des Gehäuses 11 angeschlossen, in den das Ende des Rohres 79 eingreift. Auf diese Weise steht der innere Kanal des Rohres 79 mit dem Kanal 23, insbesondere dem Rohrabschnitt 24, in Verbindung und bildet mit diesem einen Teil der Absaugleitung 18.

Die Zulauföffnung 68 in der Deckelwand 64 mündet frei in den Raum 84 aus, der zwischen der Deckelwand 64 und dem Unterteil 55 in diesem oberen Bereich gebildet ist und der zur Entlüftung der Nebenkammer 20 über deren Entlüftungsöffnung 38 und den Entlüftungsstutzen 39 mit der Nebenkammer 20 in Verbindung steht und zum Zwecke der Entlüftung über die Entlüftungsöffnung 70 und den Entlüftungskanal 69 nach außen entlüftet ist und dort über den Entlüftungsstutzen 77 und einen nicht weiter gezeigten, daran angeschlossenen Schlauch mit der Umgebung in Verbindung steht. Dem Raum 84 wird über die Zulauföffnung 68 das über den Zulaufstutzen 76 und den Zulaufkanal 67 zulaufende, vom Aquariumbecken her kommende Wasser von oben her zugeführt, so daß das Wasser nacheinander von oben nach unten die Filterabteile 12, 13 und 14 passieren und dabei gefiltertwerden kann.

Die Wirkungsweise des Filters 10 gemäß dem ersten Ausführungsbeispiel in Fig. 1 - 3 ist wie folgt. Das vom Aquarium zugeführte Wasser passiert die Filterabteile 12, 13 und 14 und gelangt zur Bodenkammer 49. Über die Zulauföffnung 28 der Leitung 29 ist die Nebenkammer 20 nach Art einer kommunizierenden Röhre mit dem Inneren des Gehäuses 11 verbunden, so daß in der Nebenkammer 20 ebenfalls Wasser enthalten ist. Die dem Filter 10 über die Zulauföffnung 68 zulaufende Wassermenge ist größer als diejenige Wassermenge, die bei geschlossener Ventileinrichtung 21 gemäß Fig. 1 über die Bypaßöffnung 41 im Kanal 23 und darüber über die Absaugleitung 18 mittels der Pumpe 19 abgesaugt wird. Aufgrund dessen steigt bei zulaufendem Wasser der Wasserspiegel im Gehäuse 11 des Filters und dementsprechend auch in der Nebenkammer 20 an Der Wasserspiegel hebt sich somit im System. Ist bei steigendem Wasserstand der Auftrieb des Schwimmers 27, insbesondere des Zylinderskörpers 42, groß genug, so schwimmt der Schwimmer 27 hoch, wodurch das Ventilverschlußglied 26 über den Träger 44 dementsprechend angehoben wird und dadurch die Ventilöffnung 25 in der Wandung 40 des Rohrabschnittes 24 freigegeben wird. Dadurch kann sich nun die Nebenkammer 20 über diese im Durchlaßquerschnitt relativ große Ventilöffnung 25 und über den Kanal 23 und die Absaugleitung 18 schlagartig entleeren. Dadurch fällt der Wasserspiegel im Gehäuse 11 und in der Nebenkammer 20 ab. Es ergibt sich der Senkbetrieb. Diese schlagartige Entleerung des Gehäuses 11 und der Nebenkammer 20 erfolgt deswegen, weil die Ventilöffnung 25 so groß gewählt ist, daß bei freigegebener Ventilöffnung 25 eine größere Wassermenge hindurchlaufen kann, als über die Zulauföffnung 68 des Zulaufs 15 zugeführt wird. Der fallende Wasserspiegel im Gehäuse 11 und in der Nebenkammer 20 führt dazu, daß in letzterer der Schwimmer 27 mitsamt dem Ventilverschlußglied 26 so weit absinkt, bis das Ventilverschlußglied 26 die Ventilöffnung 25 wieder verschließt, wie Fig. 1 zeigt. Dieser Schließvorgang wird am Ende durch die Saugwirkung der Pumpe 19 noch unterstützt.

Die Ventileinrichtung 21 ist nunmehr geschlossen. Der Zyklus beginnt von neuem in der Weise, daß das über den Zulauf 15 einfließende Wasser einen allmählich steigenden Wasserstand im Gehäuse 11 und in der Nebenkammer 20 bewirkt, was der Heben-Funktion entspricht.

Der Filter 10 ist in dieser Gestaltung kompakt, betriebssicher und aus nur wenigen, kostengünstigen und funktionssicheren Bauteilen zusammengesetzt. Zu Reinigungszwecken oder aus sonstigen Gründen kann der Deckel 56 schnell und einfach vom Unterteil 55 gelöst und abgehoben werden. Danach läßt sich ohne Probleme das seitlich angesetzte Nebengehäuse 22 abziehen. Ebenso einfach lassen sich die Filterabteile 12, 13 und 14 anheben und nach oben entnehmen. Das Rohr 79 ist entweder im Bereich der Absaugöffnung 66 des Deckels 56 fest angebracht, so daß es beim Abnehmen und Hochziehen des Deckels 56 selbsttätig mit herausgezogen wird, oder es ist nur eingesteckt, so daß beim Abheben des Deckels 56 und je nachdem noch verbleibendem Rohr 79 zunächst das Rohr 79 nach oben herauszuziehen ist. Vorteilhaft ist bei dem beschriebenen Filter 10 dann, wenn das Gehäuse 11 und die Nebenkammer 20 aus durchsichtigem Material gestaltet ist, auch, daß man den ständigen Heb-Senk-Betrieb und somit die störungsfreie Funktion des Filters 10 von außen sehen und überprüfen kann.

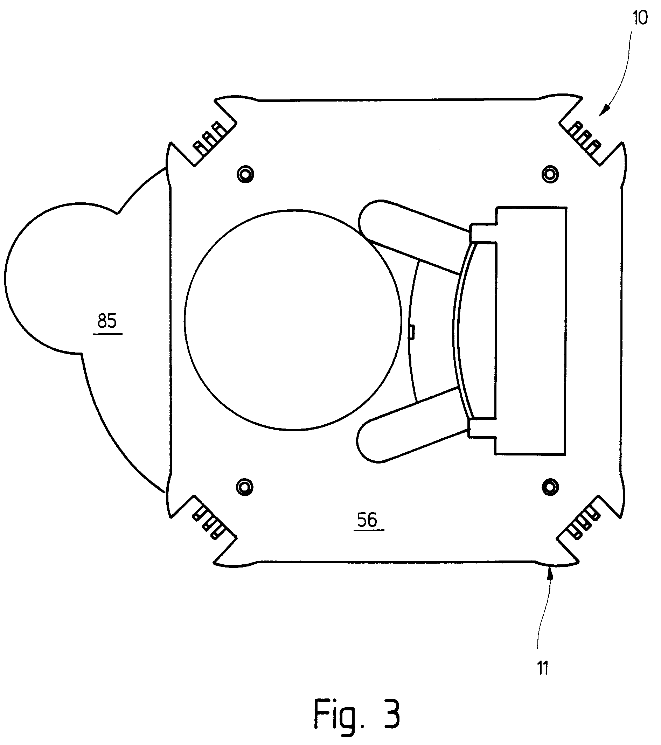

Wie sich aus Fig. 3 ergibt, hat der Deckel 56 einen seitlich abstrebenden Teil 85, der sich über das obere Ende des Nebengehäuses 22 erstreckt. Dieser Teil kann als separates, bedarfsweise an den Deckel 56 anbringbares Element ausgebildet sein, so daß dieses Teil 85 dann am Deckel 56 angebracht wird, wenn ein Filter 10 entsprechend dem ersten Ausführungsbeispiel (Fig. 1 - 3) konzipiert wird, der das beschriebene Nebengehäuse 22 und die sonstigen beschriebenen, damit im Zusammenhang stehenden Einzelbauteile aufweist.

In Fig. 4 - 6 ist ein Filter 110 gemäß einem zweiten Ausführungsbeispiel gezeigt, der allein dadurch vom ersten Ausführungsbeispiel abweicht, daß beim Filter 110 das Nebengehäuse 22 entfällt mit allen Bauteilen dazu, die die beschriebene Heb-Senk-Funktion ermöglichen. Der Deckel 56 kann ohne das Teil 85 gestaltet sein. Ist der Deckel 56 beim ersten Ausführungsbeispiel einstückig mit dem Teil 85 ausgestattet, so variiert der Deckel 56 beim zweiten Ausführungsbeispiel in Fig. 4 - 6 in der Weise, daß dieser Teil 85 beim dortigen Deckel entfällt.

Das Gehäuse 111 des Filters 110 gemäß dem zweiten Ausführungsbeispiel unterscheidet sich vom Gehäuse 11 beim ersten Ausführungsbeispiel dadurch, daß im Bereich der Bodenkammer 49 der erste Anschlußteil 34 und zweite Anschlußteil 35 entfallen sind. Im übrigen entspricht das Gehäuse 111 demjenigen des ersten Ausführungsbeispieles, so daß zur Vermeidung von Wiederholungen auf die diesbezügliche Beschreibung des ersten Ausführungsbeispieles Bezug genommen ist. Dies gilt auch für den Deckel 56 beim Filter 110 in Fig. 4 - 6. Letzterer ist im Vergleich zum ersten Ausführungsbeispiel in einer um 180° innerhalb der Deckelebene gedrehten Position auf das Unterteil 55 aufgesetzt. Im Gehäuse 111 ist oben unterhalb des Raumes 84 noch eine Filterplatte 186 eingebracht, z. B. eine Lochplatte, Gitterplatte od. dgl., mit der das oberste Filterabteil 12 abgedeckt ist.

Der Filter 110 gemäß dem zweiten Ausführungsbeispiel arbeitet nicht nur ohne Heb-Senk-Funktion sondern auch ansonsten anders als der Filter 10 gemäß dem ersten Ausführungsbeispiel. Der Zulauf 15 ist beim Filter 110 aus einem das Filterabteil 12, 13, 14 passierenden und diesem gegenüber abgeschlossenen Kanal 183 gebildet, der in die unterhalb des untersten Filterabteils 14 befindliche Bodenkammer 49 ausmündet. Die Absaugung des zugeführten Wassers geschieht hier von unten und von der Bodenkammer 49 her durch das untere Filterabteil 14, sodann das nächste Filterabteil 13 und durch das obere Filterabteil 12 hindurch nach oben entsprechend den eingezeichneten Pfeilen. Auf diesem Weg durch das jeweilige Filterabteil 14, 13 und 12 wird das Wasser gefiltert.

Diese Funktion wird bei um 180° in der Deckelebene gedrehtem Deckel 56 dadurch erreicht, daß in dieser Position die mindestens eine Absaugöffnung 66 (Fig. 4) in der Deckelwand 64 frei in den Raum 84 ausmündet und aus diesem das Wasser nach Passieren der Filterabteile 14, 13 und 12 und der Filterplatte 186 absaugt.

Dies wird im Vergleich zum ersten Ausführungsbeispiel dadurch erreicht, daß das beim ersten Ausführungsbeispiel an die mindestens eine Absaugöffnung 66 angeschlossene Rohr 79 beim Filter 110 entfällt.

In der um 180° gedrehten Position des Deckels 56 wird der Zulauf 15 wie folgt gebildet. Die Zulauföffnung 68 in der Deckelwand 64 enthält einen besonderen Stutzen 187, der z. B. eingesteckt wird. Der Stutzen 167 ragt in den Rohrkanal 183 hinein, der durch die übereinandersitzenden Rohrteile 80, 81 und 82 der Filterabteile 12 bzw. 13 bzw. 14 gebildet ist. Auf diese Weise wird ein in Fig. 4 und 5 von oben nach unten durch das Filterabteil 12, 13 und 14 verlaufender Zulauf 15 geschaffen, der gegenüber der Umgebung abgeschlossen ist und bis zur Bodenkammer 49 führt.

Da beim Filter 110 gemäß dem zweiten Ausführungsbeispiel im Bereich des Unterteils 55 der Entlüftungsstutzen 39 entfällt und im Deckel 56 der Entlüftungskanal 69 nicht notwendig ist, kann dieser mittels des angedeuteten Blindstopfens 71 oder in anderer Weise gesperrt werden, z. B. gleich bei der Formgebung des Deckels 56 oder der Anschlußeinrichtung 178.Diese unterscheidet sich von der Anschlußeinrichtung 78 des ersten Ausführungsbeispiels dadurch, daß ein besonderer Schlauchanschluß zur Herstellung der Verbindung zum Entlüftungsstutzen 77 und Entlüftungskanal 69 entfallen kann.

Etwaige Luft, die sich im Raum 84 unterhalb der Deckelwand 64 sammeln sollte, wird bei steigendem Wasserspiegel im Gehäuse 111 zwangsläufig aufgrund des Schrägverlaufs der Deckelwand 64 in Fig. 4 nach rechts und in den Bereich gezwungen, in dem sich die mindestens eine Absaugöffnung 66 befindet, die mit dem Auslaßkanal 65 als Teil der Absaugleitung 18 in Verbindung steht, so daß sichergestellt ist, daß etwaige sich im Raum 84 sammelnde Luft immer über den Aulaßkanal 65 der Absaugleitung 18 abgesaugt wird und nach außen gelangt.

## Patentansprüche

1. Filter für Aquarien, mit einem Gehäuse (11), in dem mindestens ein Filterabteil (12 bis 14) für Filtermaterial enthalten ist, dem über einen Zulauf (15) Wasser von oben her zuführbar ist, das nach Passieren des mindestens einen Filterabteils (12 bis 14) mittels einer Pumpe (19) über eine Absaugleitung (18) absaugbar und in das Aquarium zurückführbar ist, wobei der Filter (10) als alternierender Heb-Senk-Filter arbeitet und zumindest eine vom Wasser speisbare Nebenkammer (20) aufweist, deren Auslaß mittels einer schwimmergesteuerten Ventileinrichtung (21) steuerbar ist und mit der Absaugleitung (18) in Verbindung steht,
**dadurch gekennzeichnet**,
daß die Nebenkammer (20) in einem Nebengehäuse (22) ausgebildet ist und nach dem Prinzip kommunizierender Röhren von dem nach Passieren des mindestens einen Filterabteils (12 bis 14) gefilterten Wasser gespeist ist und eine von einem mittels eines Schwimmers (27) gesteuerten Ventilverschlußglied (26) der Ventileinrichtung (21) beherrschte, im Wechsel verschließbare und öffenbare Ventilöffnung (25) in einem Kanal (23) enthält, der an die Absaugleitung (18) angeschlossen ist.

2. Filter nach Anspruch 1,
**dadurch gekennzeichnet**,
daß die Nebenkammer (20) mindestens eine Zulauföffnung (28) aufweist, über die die Nebenkammer (20) mit dem Inneren des Gehäuses (11) des Filters (10) in Verbindung steht und gefiltertes Wasser zuführbar ist.

3. Filter nach Anspruch 2,
**dadurch gekennzeichnet**,
daß die Zulauföffnung (28) mit einer Leitung (29) in Verbindung steht, die unterhalb des untersten Filterabteils (14) in das Innere des Gehäuses (11) mündet.

4. Filter nach einem der Ansprüche 1 bis 3,
**dadurch gekennzeichnet**,
daß die Leitung (29) aus einem z. B. eckigen oder runden Rohrteil (30) gebildet ist.

5. Filter nach einem der Ansprüche 1 bis 4,
**dadurch gekennzeichnet**,
daß der Kanal (23) z. B. in einem eckigen oder runden Rohrabschnitt (24) ausgebildet ist.

6. Filter nach Anspruch 5,
**dadurch gekennzeichnet**,
daß der Rohrabschnitt (24) im Inneren des Rohrteils (30) verläuft, der den Rohrabschnitt (24) mit Abstand umgibt.

7. Filter nach einem der Ansprüche 1 bis 6,
**dadurch gekennzeichnet**,
daß der Kanal (23), insbesondere der Rohrabschnitt (24), und/oder die Leitung (29), insbesondere der Rohrteil (30), mit dem Nebengehäuse (22) einstückig sind.

8. Filter nach einem der Ansprüche 1 bis 7,
**dadurch gekennzeichnet**,
daß der Rohrabschnitt (24) und der Rohrteil (30) etwa horizontal verlaufen und der übrige Teil des Nebengehäuses (22) etwa vertikal verläuft.

9. Filter nach einem der Ansprüche 1 bis 8,
**dadurch gekennzeichnet**,
daß das Nebengehäuse (22) etwa rohrförmig ausgebildet ist.

10. Filter nach einem der Ansprüche 1 bis 9,
**dadurch gekennzeichnet**,
daß das Nebengehäuse (22) aus zwei koaxial aneinander anschließenden, lösbar miteinander verbundenen Rohrhälften (31, 32) gebildet ist.

11. Filter nach einem der Ansprüche 1 bis 10,
**dadurch gekennzeichnet**,
daß das Nebengehäuse (22) an das Gehäuse (11) des Filters (10) lösbar angesetzt und angeschlossen ist.

12. Filter nach einem der Ansprüche 1 bis 11,
**dadurch gekennzeichnet**,
daß das Gehäuse (11) des Filters (10) am Ende der Absaugleitung (18) einen ersten Anschlußteil (34) und einen dazu konzentrischen zweiten Anschlußteil (35) aufweist, an die der Rohrabschnitt (24) bzw. der Rohrteil (30) vorzugsweise mit zwischengefügter Dichtung, lösbar anschließbar sind, insbesondere in diese einsteckbar sind.

13. Filter nach einem der Ansprüche 1 bis 12,
**dadurch gekennzeichnet**,
daß das Nebengehäuse (22) am oberen Endbereich eine Entlüftungsöffnung (38) aufweist.

14. Filter nach Anspruch 13,
**dadurch gekennzeichnet**,
daß das Nebengehäuse (22) mit der Entlüftungsöffnung (38) an einen oberen Entlüftungsstutzen (39) des Gehäuses (11) anschließbar ist, der in das Innere des Gehäuses (11) ausmündet.

15. Filter nach einem der Ansprüche 1 bis 14,
**dadurch gekennzeichnet**,
daß die Ventilöffnung (25) in einer Wandung (40), vorzugsweise in der oberen Wandung, des Kanals (23), insbesondere des Rohrabschnitts (24), ausgebildet ist.

16. Filter nach einem der Ansprüche 1 bis 15,
**dadurch gekennzeichnet**,
daß der Kanal (23), insbesondere der Rohrabschnitt (24), zumindest eine Bypaßöffnung (41) aufweist, über die der Kanal (23) mit der Nebenkammer (20) im Nebengehäuse (22) ständig in Verbindung steht und die eine minimale Wasserabsaugung bestimmt.

17. Filter nach einem der Ansprüche 1 bis 16,
**dadurch gekennzeichnet**,
daß die Ventilöffnung (25) bzw. der Kanal (23) einen wesentlich größeren Durchlaßquerschnitt aufweisen als die Bypaßöffnung (41).

18. Filter nach einem der Ansprüche 1 bis 17,
**dadurch gekennzeichnet**,
daß der Schwimmer (27) aus einem in der Nebenkammer (20) schwimmend gehaltenen Zylinderkörper (42) gebildet ist.

19. Filter nach Anspruch 18,
**dadurch gekennzeichnet**,
daß der Zylinderkörper (42) im Querschnitt, vorzugsweise nur unwesentlich, kleiner bemessen ist als der zylindrische Innenraum (43) des rohrförmigen Nebengehäuses (22), insbesondere der Rohrhälften (31, 32).

20. Filter nach einem der Ansprüche 1 bis 19,
**dadurch gekennzeichnet**,
daß der Schwimmer (27) an einem dazu koaxialen Träger (44), insbesondere einer Stange, ein koaxiales Zylinderelement (45) als Ventilverschlußglied (26) trägt.

21. Filter nach Anspruch 20,
**gekennzeichnet durch**
ein nahe dem Zylinderelement (45) angeordnetes, im zylindrischen Innenraum (43) des rohrförmigen Nebengehäuses (22) geführtes Führungselement (46), insbesondere eine Führungsscheibe (47).

22. Filter nach einem der Ansprüche 1 bis 21,
**dadurch gekennzeichnet**,
daß das rohrförmige Nebengehäuse (22) zur Führung des Schwimmers (27) bzw. des Führungselements (46) innere Führungsteile (48), insbesondere Führungsstege, aufweist.

23. Filter nach einem der Ansprüche 1 bis 22,
**dadurch gekennzeichnet**,
daß dessen Gehäuse (11) unterhalb des untersten Filterabteils (14) eine Bodenkammer (49) aufweist, der das gefilterte Wasser nach Passieren des Filterabteils (12 bis 14) zuführbar ist.

24. Filter nach einem der Ansprüche 1 bis 23,
**dadurch gekennzeichnet**,
daß die Nebenkammer (20) im Nebengehäuse (22), insbesondere die Leitung (29), mit der Bodenkammer (49) in Verbindung steht.

25. Filter für Aquarien, mit einem Gehäuse (111), in dem mindestens ein Filterabteil (12 bis 14) für Filtermaterial enthalten ist, dem über einen Zulauf (15) Wasser zuführbar ist, das nach Passieren des mindestens einen Filterabteils (12 bis 14) mittels einer Pumpe (19) über eine Absaugleitung (18) absaugbar und in das Aquarium zurückführbar ist,
**dadurch gekennzeichnet**,
daß der Zulauf (15) aus einem das mindestens eine Filterabteil (12 bis 14) passierenden und diesem gegenüber abgeschlossenen Kanal (183) gebildet ist, der in eine unterhalb des untersten Filterabteils (14) befindliche Bodenkammer (49) im Gehäuse (111) ausmündet, und daß die Absaugung des zugeführten Wassers von unten und von der Bodenkammer (49) durch das mindestens eine Filterabteil (12 bis 14) hindurch nach oben mit dabei einhergehender Filtrierung erfolgt.

26. Filter nach einem der Ansprüche 1 bis 25,
**dadurch gekennzeichnet**,
daß jedes Filterabteil (12 bis 14) einen als Filterelement ausgebildeten Boden (8) aufweist.

27. Filter nach Anspruch 26,
**dadurch gekennzeichnet**,
daß der Boden (8) Durchlässe (9) enthält, z. B. als Gitter ausgebildet ist.

28. Filter nach einem der Ansprüche 1 bis 27,
**gekennzeichnet durch**
eine in der Bodenkammer (49) angeordente Heizeinrichtung (50), insbesondere elektrische Heizpatrone (51).

29. Filter nach einem der Ansprüche 1 bis 28,
**dadurch gekennzeichnet**,
daß das Gehäuse (11; 111) auf Höhe der Bodenkammer (49) an einer äußeren Umfangsseite eine z. B. mittels einer Kappe (53) verschließbare Hohlkammer (52) aufweist, in der eine Halterung der Heizeinrichtung (50) und/oder eine elektrische oder elektronische Steuereinrichtung (54) aufnehmbar ist.

30. Filter nach einem der Ansprüche 1 bis 29,
**dadurch gekennzeichnet**,
daß das Gehäuse (11; 111) ein etwa topfförmiges Unterteil (55) aufweist, in das das mindestens eine Filterabteil (12 bis 14) einsetzbar ist, das darin lösbar halterbar ist.

31. Filter nach einem der Ansprüche 1 bis 30,
**dadurch gekennzeichnet**,
daß das Gehäuse (11; 111) einen Deckel (56) aufweist, der zum Abschluß des Unterteils (55) auf dieses von oben her aufsetzbar und daran lösbar fixierbar ist.

32. Filter nach einem der Ansprüche 1 bis 31,
**dadurch gekennzeichnet**,
daß der Deckel (56) mittels am Unterteil (55) sitzender Verschlußglieder, z. B. Verschlußbügeln, lösbar mit dem Unterteil (55) verbindbar ist.

33. Filter nach einem der Ansprüche 1 bis 32,
**dadurch gekennzeichnet**,
daß zwischen dem Deckel (56) und dem Unterteil (55) eine axial zusammendrückbare Dichtung (57), insbesondere ein Formdichtungsring, angeordnet ist.

34. Filter nach Anspruch 33,
**dadurch gekennzeichnet**,
daß die Dichtung (57) in einer Nut (58) des Deckels (56) aufgenommen ist, die zum Unterteil (55) hin offen ist und in die ein oberer Randteil (59) des Unterteils (55) eingreifen kann.

35. Filter nach einem der Ansprüche 1 bis 34,
**dadurch gekennzeichnet**,
daß der Deckel (56) und das Unterteil (55) einen etwa viereckigen, insbesondere etwa quadratischen, Umriß aufweisen.

36. Filter nach einem der Ansprüche 1 bis 35,
**dadurch gekennzeichnet**,
daß der Deckel (56) und/oder das Unterteil (55) und/oder das Nebengehäuse (22) aus Kunststoff gebildet sind.

37. Filter nach einem der Ansprüche 1 bis 36,
**dadurch gekennzeichnet**,
daß der Deckel (56) zumindest einen Teil der Absaugleitung (18) enthält.

38. Filter nach einem der Ansprüche 1 bis 37,
**dadurch gekennzeichnet**,
daß der Deckel (56) die Pumpe (19) und einen zu deren Antrieb dienenden Elektromotor (61) enthält, wobei das Laufrad (60) der Pumpe (19) sich in der Absaugleitung (18) befindet.

39. Filter nach einem der Ansprüche 1 bis 38,
**dadurch gekennzeichnet**,
daß im Deckel (56) oberhalb einer Deckelunterseite ein etwa horizontaler Auslaßkanal (65) verläuft, der einen Teil der Absaugleitung (18) bildet.

40. Filter nach einem der Ansprüche 1 bis 39,
**dadurch gekennzeichnet**,
daß eine die Deckelunterseite begrenzende Deckelwand (64) im Bereich des oberhalb davon befindlichen Laufrades (60) der Pumpe (19) zumindest eine mit dem Auslaßkanal (65) der Absaugleitung (18) in Verbindung stehende Absaugöffnung (66) enthält.

41. Filter nach Anspruch 40,
**dadurch gekennzeichnet**,
daß die Deckelwand (64) von einer Außenseite ausgehend zur mindestens einen Absaugöffnung (66) schräg ansteigt.

42. Filter nach einem der Ansprüche 1 bis 41,
**dadurch gekennzeichnet**,
daß der Deckel (56) einen Zulaufkanal (67) enthält, der in eine in der Deckelwand (64) enthaltene Zulauföffnung (68) ausmündet.

43. Filter nach einem der Ansprüche 1 bis 42,
**dadurch gekennzeichnet**,
daß der Deckel (56) einen zur Deckelunterseite offenen, bei Nichtbedarf z. B. mittels eines Blindstopfens (71) od. dgl. verschließbaren, Entlüftungskanal (69) mit endseitiger Entlüftungsöffnung (70) enthält, die in der Deckelwand (64) enthalten ist und dort ausmündet.

44. Filter nach einem der Ansprüche 1 bis 43,
**dadurch gekennzeichnet**,
daß der im Deckel (56) enthaltene Auslaßkanal (65) und/oder Zulaufkanal (67) und/oder Entlüftungskanal (69) im Deckel (56) jeweils eine Aufnahme (72 bzw. 73 bzw. 74) für den Anschluß eines Auslaufstutzens (75) bzw. Zulaufstutzens (76) bzw. Entlüftungsstutzens (77) aufweist.

45. Filter nach einem der Ansprüche 12 bis 44,
**dadurch gekennzeichnet**,
daß an die mindestens eine Absaugöffnung (66) in der Deckelwand (64) ein Rohr (79) angeschlossen ist, das das mindestens eine Filterabteil (12 bis 14) passiert, diesem gegenüber abgeschlossen ist und einen Teil der Absaugleitung (18) bildet und mit seinem Ende an den ersten Anschlußteil (34) des Gehäuses (11) angeschlossen ist, mit dem der Kanal (23), insbesondere der Rohrabschnitt (24), in Verbindung steht.

46. Filter nach einem der Ansprüche 1 bis 42,
**dadurch gekennzeichnet**,
daß die Zulauföffnung (68) in der Deckelwand (64) frei in den zwischen der Deckelwand (64) und dem Unterteil (55) gebildeten Raum (84) mündet und das zulaufende Wasser von oben her dem mindestens einen Filterabteil (12 bis 14) zuführt.

47. Filter nach einem der Ansprüche 25 bis 45,
**dadurch gekennzeichnet**,
daß die mindestens eine Absaugöffnung (66) in der Deckelwand (64) frei in den zwischen der Deckelwand (64) und dem Unterteil (55) gebildeten Raum (84) mündet und aus diesem das Wasser nach Passieren des mindestens einen darunter befindlichen Filterabteils (12 bis 14) absaugt.

48. Filter nach einem der Ansprüche 25 bis 45,
**dadurch gekennzeichnet**,
daß die Zulauföffnung (68) in der Deckelwand (64) einen Stutzen (187) enthält und über den Stutzen (187) an den das mindestens eine Filterabteil (12 bis 14) passierenden Kanal (183) angeschlossen ist.

49. Filter nach einem der Ansprüche 1 bis 48,
**dadurch gekennzeichnet**,
daß der Deckel (56) je nach Bauart des Filters (10; 110) in einer Position (Fig. 1 - 3) oder in einer dieser Position gegenüber um 180° innerhalb der Deckelebene gedrehten Position (Fig. 4 - 6) auf das Unterteil (55) aufgesetzt ist.

50. Filter nach einem der Ansprüche 25 bis 29.
**dadurch gekennzeichnet,**
das das oberste Filterabteil (12) oberseitig mittels einer Filterplatte (186), z. B. einer Lochplatte, Gitterplatte od. dgl., abgedeckt ist.

## Claims

1. Filter for aquaria, with a housing (11), which contains at least one filter compartment (12 to 14) for filter material, to which water may be supplied from above by way of an inlet (15), which water, after passing through the at least one filter Compartment (12 to 14), can be removed by suction by means of a pump (19) by way of a suction pipe (18) and can be returned to the aquarium, in which case the filter (10) operates as an alternating lifting and lowering filter and comprises at least one secondary chamber (20) able to be supplied with water, whereof the outlet may be controlled by means of a float-controlled valve device (21) and is connected to the suction pipe (18), characterised in that the secondary chamber (20) is constructed in a secondary housing (22) and according to the principle of communicating pipes is supplied with the water filtered after passing through at least one filter compartment (12 to 14) and contains a valve opening (25) in a channel (23), which opening is controlled by a valve closure member (26) of the valve device (21) controlled by means of a float (27) and able to be closed and opened alternately, which channel (23) is connected to the suction pipe (18).

2. Filter according to Claim 1, characterised in that the secondary chamber (20) comprises at least one inlet opening (28), by which the secondary chamber (20) is connected to the inside of the housing (11) of the filter (10) and filtered water can be supplied.

3. Filter according to Claim 2, characterised in that the inlet opening (28) is connected to a pipe (29), which below the lowermost filter compartment (14) opens into the inside of the housing (11).

4. Filter according to one of Claims 1 to 3, characterised in that the pipe (29) is formed from a for example square or round tube part (30).

5. Filter according to one of Claims 1 to 4, characterised in that the channel (23) is constructed for example in a square or round tube section (24).

6. Filter according to Claim 5, characterised in that the tube section (24) extends inside the tube part (30), which surrounds the tube section (24) at a distance.

7. Filter according to one of Claims 1 to 6, characterised in that the channel (23), in particular the tube section (24), and/or the pipe (29), in particular the tube part (30), are in one piece with the secondary housing (22).

8. Filter according to one of Claims 1 to 7, characterised in that the tube section (24) and the tube part (30) extend approximately horizontally and the remaining part of the secondary housing (22) extends approximately vertically.

9. Filter according to one of Claims 1 to 8, characterised in that the secondary housing (22) is constructed to be approximately tubular.

10. Filter according to one of Claims 1 to 9, characterised in that the secondary housing (22) is formed from two tube halves (31, 32) adjoining each other coaxially and detachably connected to each other.

11. Filter according to one of Claims 1 to 10, characterised in that the secondary housing (22) is detachably fitted and connected to the housing (11) of the filter (10).

12. Filter according to one of Claims 1 to 11, characterized in that at the end of the suction pipe (18) the housing (11) of the filter (10) comprises a first connection part (34) and a second connection part (35) concentric therewith, to which the tube section (24) or the tube part (30), preferably with an interposed gasket, can be detachably connected, in particular can be inserted in the latter.

13. Filter according to one of Claims 1 to 12, characterised in that the secondary housing (22) comprises a ventilation opening (38) in the upper end region.

14. Filter according to Claim 13, characterized in that the secondary housing (22) can be connected to the ventilation opening (38) on an upper ventilation branch (39) of the housing (11), which opens into the inside of the housing (11).

15. Filter according to one of Claims 1 to 14, characterised in that the valve opening (25) is constructed in a wall (40), preferably in the upper wall, of the channel (23), in particular of the tube section (24).

16. Filter according to one of Claims 1 to 15, characterised in that the channel (23), in particular the tube section (24), comprises at least one by-pass opening (41), by way of which the channel (23) is in permanent connection with the secondary chamber (20) in the secondary housing (22) and which determines a minimum removal of water by suction.

17. Filter according to one of Claims 1 to 16, characterised in that the valve opening (25) or the channel (23) has a substantially larger throughflow cross-section than the by-pass opening (41).

18. Filter according to one of Claims 1 to 17, characterised in that the float (27) is formed from a cylinder body (42) held in a floating manner in the secondary chamber (20).

19. Filter according to Claim 18, characterised in that in cross-section the cylinder body (42) preferably has only slightly smaller dimensions than the cylindrical interior (43) of the tubular secondary housing (22), in particular of the tube halves (31, 32).

20. Filter according to one of Claims 1 to 19, characterised in that the float (27) supports, on a support (44) coaxial therewith, in particular a rod, a coaxial cylinder member (45) as a valve-closing member (26).

21. Filter according to Claim 20, characterised by a guide member (46), in particular a guide disc (47), located close to the cylinder member (45) and guided in the cylindrical interior (43) of the tubular secondary housing (22).

22. Filter according to one of Claims 1 to 21, characterised in that for guiding the float (27) or the guide member (46), the tubular secondary housing (22) comprises inner guide parts (48), in particular guide webs.

23. Filter according to one of Claims 1 to 22, characterised in that its housing (11) comprises below the lowermost filter compartment (14) a bottom chamber (49), to which the filtered water can be supplied after passing through the filter compartment (12 to 14).

24. Filter according to one of Claims 1 to 23, characterised in that the secondary chamber (20) in the secondary housing (22), in particular the pipe (29), is connected to the bottom chamber (49).

25. Filter for aquaria, with a housing (111), which contains at least one filter compartment (12 to 14) for filter material, to which water can be supplied by way of an inlet (15), which after passing through the at least one filter compartment (12 to 14) can be removed by suction by means of a pump (19) by way of a suction pipe (18) and can be returned to the aquarium, characterised in that the inlet (15) is formed from a channel (183) passing through the at least one filter compartment (12 to 14) and closed with respect thereto, which channel opens into a bottom chamber (49) in the housing (111) located below the lowermost filter compartment (14) and that the suction of the water supplied takes place from below and from the bottom chamber (49) through the at least one filter compartment (12 to 14) upwards with the accompanying filtration.

26. Filter according to one of Claims 1 to 25, characterised in that each filter compartment (12 to 14) comprises a base (8) constructed as a filter member.

27. Filter according to Claim 26, characterized in that the base (8) comprises openings (9), for example it is constructed as a grating.

28. Filter according to one of Claims 1 to 27, characterised by a heating device (50), in particular an electrical heating cartridge (51), located in the bottom chamber (49).

29. Filter according to one of Claims 1 to 28, characterized in that level with the bottom chamber (49), on an outer peripheral side, the housing (11; 111) comprises a hollow chamber (52), able to be closed for example by means of a cap (53), in which a mounting for the heating device (50) and/or an electrical or electronic control device (54) can be received.

30. Filter according to one of Claims 1 to 29, characterised in that the housing (11, 111) comprises an approximately cup-shaped lower part (55), into which the at least one filter compartment (12 to 14) can be inserted, which can be detachably mounted therein.

31. Filter according to one of Claims 1 to 30, characterised in that the housing (11; 111) comprises a cover (56), which for closing-off the lower part (55), can be fitted on the latter from above and detachably fixed thereto.

32. Filter according to one of Claims 1 to 31, characterised in that the cover (56) can be detachably connected to the lower part (55) by means of fastening members, for example fastening clips, seated on the lower part (55).

33. Filter according to one of Claims 1 to 32, characterised in that located between the cover (56) and the lower part (55) is an axially compressible gasket (57), in particular a shaped sealing ring.

34. Filter according to Claim 33, characterised in that the gasket (57) is received in a groove (58) in the cover (56), which is open towards the lower part (55) and in which an upper edge part (59) of the lower part (55) may engage.

35. Filter according to one of Claims 1 to 34, characterized in that the cover (56) and the lower part (55) have an approximately rectangular, in particular approximately square contour.

36. Filter according to one of Claims 1 to 35, characterised in that the cover (56) and/or the lower part (55) and/or the secondary housing (22) are made from synthetic material.

37. Filter according to one of Claims 1 to 36, characterised in that the cover (56) contains at least one part of the suction pipe (18).

38. Filter according to one of Claims 1 to 37, characterised in that the cover (56) contains the pump (19) and an electric motor (61) serving for driving it, in which case the impeller (60) of the pump (19) is located in the suction pipe (18).

39. Filter according to one of Claims 1 to 38, characterised in that extending in the cover (56) above an under side of the cover is an approximately horizontal outlet channel (65), which forms part of the suction pipe (18).

40. Filter according to one of Claims 1 to 39, characterised in that a cover wall (64) defining the under side of the cover, in the region of the impeller (60) of the pump (19) located above the latter, contains at least one suction opening (66) connected to the outlet channel (65) of the suction pipe (18).

41. Filter according to Claim 40, characterised in that the cover wall (64) slopes upwards starting from an outer side to at least one suction opening (66).

42. Filter according to one of Claims 1 to 41, characterised in that the cover (56) contains an inlet channel (67), which opens into an inlet opening (68) contained in the cover wall (64).

43. Filter according to one of Claims 1 to 42, characterised in that the cover (56) contains a ventilation channel (69) which is open towards the under side of the cover and can be closed when it is not needed, for example by means of a blind plug (71) or the like, with a ventilation opening (70) on the end side, which is contained in the cover wall (64) and opens out there.

44. Filter according to one of Claims 1 to 43, characterised in that the outlet channel (65) contained in the cover (56) and/or the inlet channel (67) and/or the ventilation channel (69) in the cover (56) respectively comprises a holder (72 or 73 or 74) for the connection of an outlet connection (75) or inlet connection (76) or ventilation connection (77).

45. Filter according to one of Claims 12 to 14, characterised in that connected to at least one suction opening (66) in the cover wall (64) is a tube (79), which passes through the at least one filter compartment (12 to 14), is closed with respect to the latter and forms part of the suction pipe (18) and is connected by its end to the first connection part (34) of the housing (11), to which the channel (23), in particular the tube section (24), is connected.

46. Filter according to one of Claims 1 to 42, characterised in that the inlet opening (68) in the cover wall (64) opens freely into the space (84) formed between the cover wall (64) and the lower part (55) and the incoming water is supplied from above to the at least one filter compartment (12 to 14).

47. Filter according to one of Claims 25 to 45, characterized in that the at least one suction opening (66) in the cover wall (64) opens freely into the space (84) formed between the cover wall (64) and the lower part (55) and sucks the water from the latter after passing through the at least one filter compartment (12 to 14) located therebelow.

48. Filter according to one of Claims 25 to 45, characterised in that the inlet opening (68) in the cover wall (64) contains a connection (187) and by way of the connection (187) is connected to the channel (183) passing at least through one filter compartment (12 to 14).

49. Filter according to one of Claims 1 to 48, characterised in that depending on the construction of the filter (10; 110), the cover (56) is fitted to the lower part (55) in a position (Figure 1 - 3) or in a position (Figure 4 - 6) rotated through 180° within the plane of the cover with respect to this position.

50. Filter according to one of Claims 25 to 29, characterised in that the uppermost filter compartment (12) is covered on the upper side by means of a filter plate (186), for example a perforated plate, lattice plate or the like.

## Revendications

1. Filtre pour aquariums, comportant un boîtier (11) qui contient au moins un compartiment de filtration (12 à 14) pour de la matière filtrante auquel peut être amenée d'en haut par une arrivée (15) de l'eau qui, après avoir traversé le ou les compartiments de filtration (12 à 14), peut, au moyen d'une pompe (19), être aspirée par une conduite d'aspiration (18) et renvoyée dans l'aquarium, le filtre (10) fonctionnant en filtre alternatif à montée et descente et présentant au moins une chambre secondaire (20) pouvant être alimentée par l'eau et dont la sortie peut être commandée au moyen d'un dispositif à soupape commandé par flotteur (21) et communique avec la conduite d'aspiration (18), caractérisé par le fait que la chambre secondaire (20) est formée dans un boîtier secondaire (22) et est alimentée suivant le principe des vases communicants par l'eau filtrée qui a traversé le ou les compartiments de filtration (12 à 14), et contient dans un conduit (23) qui est raccordé à la conduite d'aspiration (18) un orifice (25) qui peut être alternativement fermé et ouvert et est commandé par un obturateur (26), commandé au moyen d'un flotteur (27), du dispositif à soupape (21).

2. Filtre selon la revendication 1, caractérisé par le fait que la chambre secondaire (20) présente au moins un orifice d'arrivée (28) par lequel elle communique avec l'intérieur du boîtier (11) du filtre (10) et de l'eau filtrée peut être amenée.

3. Filtre selon la revendication 2, caractérisé par le fait que l'orifice d'arrivée (28) communique avec une conduite (29) qui débouche à l'intérieur du boîtier (11) au-dessous du compartiment de filtration inférieur (14).

4. Filtre selon l'une des revendications 1 à 3, caractérisé par le fait que la conduite (29) est formée d'un morceau de tube (30) par exemple polygonal ou rond.

5. Filtre selon l'une des revendications 1 à 4, caractérisé par le fait que le conduit (23) est formé par exemple dans un tronçon de tube polygonal ou rond (24).

6. Filtre selon la revendication 5, caractérisé par le fait que le tronçon de tube (24) s'étend à l'intérieur du morceau de tube (30), qui entoure à distance le tronçon de tube (24).

7. Filtre selon l'une des revendications 1 à 6, caractérisé par le fait que le conduit (23), en particulier le tronçon de tube (24), et/ou la conduite (29), en particulier le morceau de tube (30), font corps avec le boîtier secondaire (22).

8. Filtre selon l'une des revendications 1 à 7, caractérisé par le fait que le tronçon de tube (24) et le morceau de tube (30) s'étendent à peu près horizontalement et la partie restante du boîtier secondaire (22) s'étend à peu près verticalement.

9. Filtre selon l'une des revendications 1 à 8, caractérisé par le fait que le boitier secondaire (22) est à peu près tubulaire.

10. Filtre selon l'une des revendications 1 à 9, caractérisé par le fait que le boîtier secondaire (22) est formé de deux demi-tubes (31, 32) contigus coaxialement et assemblés de manière démontable.

11. Filtre selon l'une des revendications 1 à 10, caractérisé par le fait que le boîtier secondaire (22) est appliqué sur le boftier (11) du filtre (10) et y est raccordé de manière démontable.

12. Filtre selon l'une des revendications 1 à 11, caractérisé par le fait que le boîtier (11) du filtre (10) présente à l'extrémité de la conduite d'aspiration (18) une première partie de raccordement (34) et une deuxième partie de raccordement (35) concentrique avec celle-ci auxquelles le tronçon de tube (24) et le morceau de tube (30) peuvent être raccordés de manière démontable, en particulier par enfichage, de préférence avec intercalation d'un joint d'étanchéité.

13. Filtre selon l'une des revendications 1 à 12, caractérisé par le fait que le boîtier secondaire (22) présente dans sa partie d'extrémité supérieure un orifice évent (38).

14. Filtre selon la revendication 13, caractérisé par le fait que le boîtier secondaire (22) peut être raccordé par l'orifice évent (38) à une tubulure évent supérieure (39) du boîtier (11) qui débouche à l'intérieur du boîtier (11).

15. Filtre selon l'une des revendications 1 à 14, caractérisé par le fait que l'orifice à soupape (25) est fait dans une paroi (40), de préférence dans la paroi supérieure, du conduit (23), en particulier du tronçon de tube (24).

16. Filtre selon l'une des revendications 1 à 15, caractérisé par le fait que le conduit (23), en particulier le tronçon de tube (24), présente au moins un orifice de dérivation (41) par lequel le conduit (23) communique en permanence avec la chambre secondaire (20) située dans le boîtier secondaire (22) et qui détermine une aspiration minimale d'eau.

17. Filtre selon l'une des revendications 1 à 16, caractérisé par le fait que l'orifice à soupape (25) et le conduit (23) présentent une bien grande section de passage que l'orifice de dérivation (41).

18. Filtre selon l'une des revendications 1 à 17, caractérisé par le fait que le flotteur (27) est formé d'un corps cylindrique (42) monté flottant dans la chambre secondaire (20).

19. Filtre selon la revendication 18, caractérisé par le fait que le corps cylindrique (42) est de section inférieure, de préférence de très peu, à celle de l'intérieur cylindrique (43) du boîtier secondaire tubulaire (22), en particulier des demi-tubes (31, 32).

20. Filtre selon l'une des revendications 1 à 19, caractérisé par le fait que le flotteur (27) porte sur un support (44) coaxial avec lui, de préférence une tige, un élément cylindrique coaxial (45) qui fait office d'obturateur (26).

21. Filtre selon la revendication 20, caractérisé par un élément de guidage (46), en particulier un disque de guidage (47), placé près de l'élément cylindrique (45) et guidé à l'intérieur cylindrique (43) du boitier secondaire tubulaire (22).

22. Filtre selon l'une des revendications 1 à 21, caractérisé par le fait que le boîtier secondaire tubulaire (22) présente des éléments de guidage intérieurs (48), en particulier des nervures de guidage, pour le guidage du flotteur (27) ou de l'élément de guidage (46).

23. Filtre selon l'une des revendications 1 à 22, caractérisé par le fait que son boîtier (11) présente au-dessous du compartiment de filtration inférieur (14) une chambre de fond (49) à laquelle l'eau filtrée, après avoir traversé les compartiments de filtration (12 à 14), peut être amenée.

24. Filtre selon l'une des revendications 1 à 23, caractérisé par le fait que la chambre secondaire (20) située dans le boîtier secondaire (22), en particulier la conduite (29), communique avec la chambre de fond (49).

25. Filtre pour aquariums, comportant un boîtier (111) qui contient au moins un compartiment de filtration (12 à 14) pour de la matière filtrante auquel peut être amenée par une arrivée (15) de l'eau qui, après avoir traversé le ou les compartiments de filtration (12 à 14), peut, au moyen d'une pompe (19), être aspirée par une conduite d'aspiration (18) et renvoyée dans l'aquarium, caractérisé par le fait que l'arrivée (15) est formée d'un conduit (183) qui traverse le ou les compartiments de filtration (12 à 14), est fermé vis-à-vis de celui-ci ou ceux-ci et débouche dans une chambre de fond (49) située dans le boîtier (111) au-dessous du compartiment de filtration inférieur (14), et que l'aspiration de l'eau amenée se fait d'en bas et de la chambre de fond (49) à travers le ou les compartiments de filtration (12 à 14) vers le haut avec en même temps filtration.

26. Filtre selon l'une des revendications 1 à 25, caractérisé par le fait que chaque compartiment de filtration (12 à 14) présente un fond (8) constitué d'un élément filtrant.

27. Filtre selon la revendication 26, caractérisé par le fait que le fond (8) contient des passages (9) et est par exemple en forme de grille.

28. Filtre selon l'une des revendications 1 à 27, caractérisé par un dispositif de chauffage (50), en particulier une cartouche chauffante électrique (51), placé dans la chambre de fond (49).

29. Filtre selon l'une des revendications 1 à 28, caractérisé par le fait que le boîtier (11 ; 111) présente à la hauteur de la chambre de fond (49), sur un côté périphérique extérieur, une chambre creuse (52) qui peut être fermée par exemple au moyen d'un chapeau (53) et peut recevoir un support du dispositif de chauffage (50) et/ou un dispositif de commande électrique ou électronique (54).

30. Filtre selon l'une des revendications 1 à 29, caractérisé par le fait que le boîtier (11 ; 111) présente une partie inférieure à peu près en forme de pot (55) dans laquelle le ou les compartiments de filtration (12 à 14) peuvent être introduits et fixés de manière détachable.

31. Filtre selon l'une des revendications 1 à 30, caractérisé par le fait que le boîtier (11 ; 111) présente un couvercle (56) qui peut être posé d'en haut sur la partie inférieure (55) pour la fermer et y être fixé de manière détachable.

32. Filtre selon l'une des revendications 1 à 31, caractérisé par le fait que le couvercle (56) peut être joint de manière détachable à la partie inférieure (55) au moyen d'éléments de fermeture, par exemple d'étriers de fermeture, prévus sur celle-ci.

33. Filtre selon l'une des revendications 1 à 32, caractérisé par le fait qu'entre le couvercle (56) et la partie inférieure (55) est placé un joint d'étanchéité compressible axialement (57), en particulier un joint annulaire façonné.

34. Filtre selon la revendication 33, caractérisé par le fait que le joint d'étanchéité (57) est placé dans une rainure (58) du couvercle (56) qui est ouverte vers la partie inférieure (55) et dans laquelle peut s'engager une partie de bord supérieure (59) de la partie inférieure (55).

35. Filtre selon l'une des revendications 1 à 34, caractérisé par le fait que le couvercle (56) et la partie inférieure (55) présentent un contour à peu près rectangulaire, en particulier à peu près carré.

36. Filtre selon l'une des revendications 1 à 35, caractérisé par le fait que le couvercle (56) et/ou la partie inférieure (55) et/ou le boîtier secondaire (22) sont en plastique.

37. Filtre selon l'une des revendications 1 à 36, caractérisé par le fait que le couvercle (56) contient au moins une partie de la conduite d'aspiration (18).

38. Filtre selon l'une des revendications 1 à 37, caractérisé par le fait que le couvercle (56) contient la pompe (19) et un moteur électrique (61) qui entraîne celle-ci, la roue (60) de la pompe (19) se trouvant dans la conduite d'aspiration (18).

39. Filtre selon l'une des revendications 1 à 38, caractérisé par le fait que dans le couvercle (56) s'étend au-dessus d'un côté inférieur de couvercle un conduit de sortie à peu près horizontal (65) qui forme une partie de la conduite d'aspiration (18).

40. Filtre selon l'une des revendications 1 à 39, caractérisé par le fait qu'une paroi de couvercle (64) délimitant le côté inférieur de couvercle contient dans la zone de la roue (60), située au-dessus de celle-ci, de la pompe (19) au moins un orifice d'aspiration (66) qui communique avec le conduit de sortie (65) de la conduite d'aspiration (18).

41. Filtre selon la revendication 40, caractérisé par le fait que la paroi de couvercle (64) monte obliquement à partir d'un côté extérieur vers l'orifice ou les orifices d'aspiration (66).

42. Filtre selon l'une des revendications 1 à 41, caractérisé par le fait que le couvercle (56) contient un conduit d'arrivée (67) qui débouche dans un orifice d'arrivée (68) contenu dans la paroi de couvercle (64).

43. Filtre selon l'une des revendications 1 à 42, caractérisé par le fait que le couvercle (56) contient un conduit évent (69) qui est ouvert vers le côté inférieur de couvercle, peut, si l'on n'en a pas besoin, être obturé par exemple au moyen d'un faux bouchon (71) ou d'un élément semblable et a à son extrémité un orifice évent (70) qui est contenu dans la paroi de couvercle (64) et débouche à cet endroit.

44. Filtre selon l'une des revendications 1 à 43, caractérisé par le fait que le conduit de sortie (65) et/ou le conduit d'arrivée (67) et/ou le conduit évent (69) contenus dans le couvercle (56) présentent chacun dans celui-ci une alvéole (72 ou 72 ou 74) pour le raccordement respectivement d'une tubulure de sortie (75), d'une tubulure d'arrivée (76) et d'une tubulure évent (77).

45. Filtre selon l'une des revendications 12 à 44, caractérisé par le fait qu'à l'orifice ou aux orifices d'aspiration (66) situés dans la paroi de couvercle (64) est raccordé un tube (79) qui traverse le ou les compartiments de filtration (12 à 14), est fermé vis-à-vis de celui-ci ou ceux-ci et forme une partie de la conduite d'aspiration (18) et est raccordé par son extrémité à la première partie de raccordement (34) du boitier (11), avec laquelle le conduit (23), en particulier le tronçon de tube (24), communique.

46. Filtre selon l'une des revendications 1 à 42, caractérisé par le fait que l'orifice d'arrivée (68) situé dans la paroi de couvercle (64) débouche librement dans l'espace (84) formé entre la paroi de couvercle (64) et la partie inférieure (55) et conduit d'en haut l'eau qui arrive au compartiment ou aux compartiments de filtration (12 à 14).

47. Filtre selon l'une des revendications 25 à 45, caractérisé par le fait que l'orifice ou les orifices d'aspiration (66) situé(s) dans la paroi de couvercle (64) débouche(nt) librement dans l'espace (84) formé entre la paroi de couvercle (64) et la partie inférieure (55) et aspire(nt) l'eau de celui-ci après qu'elle a traversé le ou les compartiments de filtration (12 à 14) situés dessous.

48. Filtre selon l'une des revendications 25 à 45, caractérisé par le fait que l'orifice d'arrivée (68) situé dans la paroi de couvercle (64) contient une tubulure (187) et est raccordé par cette tubulure (187) au conduit (183) qui traverse le compartiment ou les compartiments de filtration (12 à 14).

49. Filtre selon l'une des revendications 1 à 48, caractérisé par le fait que le couvercle (56) peut, suivant le type du filtre (10 ; 110), être posé sur la partie inférieure (55) dans une position (fig. 1 à 3) ou dans une autre position tournée de 180° dans le plan du couvercle par rapport à la précédente (fig. 4 à 6).

50. Filtre selon l'une des revendications 25 à 29, caractérisé par le fait que le compartiment de filtration supérieur (12) est couvert sur le côté supérieur par une plaque filtrante (186), par exemple une plaque perforée, une plaque en forme de grille ou une plaque semblable.
